# EUROPEAN PATENT SPECIFICATION

(11) **EP 4 485 295 B1**
(45) Date of publication and mention of the grant of the patent: **29.04.2026**
(21) Application number: 23182099.4
(22) Date of filing: 28.06.2023
(51) Int. Cl.: G06N 20/00, G06F 9/451

(54) **LABELLING OF USER ACTION DATA IN A USER ENVIRONMENT**
ETIKETTIERUNG VON BENUTZERAKTIONSDATEN IN EINER BENUTZERUMGEBUNG
ÉTIQUETAGE DE DONNÉES D'ACTION D'UTILISATEUR DANS UN ENVIRONNEMENT D'UTILISATEUR

(43) Date of publication of application: 01.01.2025
(73) Proprietor: Siemens Industry Software NV, 3001 Leuven (BE)
(72) Inventor: Berger, Daniel, 90443 Nürnberg (DE); Bosco, Arianna, 80638 München (DE); Lamparter, Steffen, 85622 Feldkirchen (DE)
(74) Representative: Siemens Patent Attorneys

(56) References cited:
- US-A1- 2018 025 071
- US-B2- 11 550 688

## Description

### FIELD OF THE INVENTION

The invention relates to a computer-implemented method for labelling of user action data in a user environment, in particular wherein said user environment is a computer implemented user interactive environment. Furthermore, the invention relates to a system for labelling of user action data in a computer implemented user interactive environment.

Learning how to operate a new machine or how to use a new software is a cumbersome task both for experienced people and for new recruits. While training is offered to give a first insight, the expert and domain knowledge is not easily transferable. This results in long learning time and makes the use of machine and software error prone. User assistance technology could offer a way to shorten learning time and provide in-context support. In many cases, rule-based assistance is not possible, because the rules are unknown or too difficult to implement. Therefore, modern assistance technology is typically data-driven. In an industrial context assistance technology faces a set of aggravating challenges: user data is scarce, user contexts vary greatly, and recommendations are critical so that a high level of accuracy is required.

US6564213B1, US 8,645,825 B1 deal with a known user assistance technology called "autocomplete" or "predictive text". Autocomplete is a feature that suggests words or phrases to users as they type, based on previous input or commonly used phrases. This feature is commonly used in search engines, text messaging apps, and other applications where users enter text.

In user assistance technology, autocomplete can be used to suggest commands or actions based on the user's current context or history of previous actions. For example, an AI assistant could suggest common commands or actions based on the user's previous interactions with the system or based on the user's current task or goal.

Another form of command prediction in user assistance technology is called "intent recognition" known e.g. from US2012/0016678 A1. Intent recognition involves analyzing user input to determine the user's intended action or request. This can be used to suggest relevant commands or actions to the user, or to automate common tasks based on the user's input.

Overall, command prediction is a powerful tool in user assistance technology, as it can help users navigate complex systems more quickly and efficiently.

When applying a machine learning assistant to best support the user one key factor appears to be the training data for the assistant.

The training data may be gathered from manuals - on a low level - and from logging user actions - enabling high level training for the assistant.

As of now, if available at all, the typical user action data logging results in an unlabeled sequence of user interactions. The data is either locally stored in form of log-files, or gathered via telemetric business intelligence. Such data is diluted, hence almost useless, as only a tiny subset of user interactions represent a meaningful sequence of steps. Furthermore, there is no reasoning available, to understand why the user has performed the logged actions and in which context.

Siemens NX CAD is a computer-aided design (CAD) software developed by Siemens Digital Industries Software. It is used for designing and developing products in various industries, such as automotive, aerospace, and industrial machinery.

The "NX" in Siemens NX CAD stands for "Unigraphics NX", which was the original name of the software before it was acquired by Siemens.

"Command Prediction in Siemens NX CAD" is one example of command prediction technology in user assistance. Siemens NX CAD includes a command prediction feature that suggests the next command or function to the user based on their current context and previous actions.

The command prediction feature in Siemens NX CAD uses machine learning algorithms to analyze the user's input and predict the next command or function that the user is likely to use.

This assistance technology for industrial scenarios has typically two shortcomings:
1. Recommendations have a very limited horizon, e.g. only the next step, and not entire sequences. This drawback may be caused by insufficient training.
2. The underlying models are not self-learning.

According to US 11 550 688 B2 a supervised learning model may be trained using a labeled data set comprising back end calls and their associated logic flow associated with the back end calls.

According to US 2018/0025071 A1 IT-system events may be classified to improve IT-administration, wherein events may be labelled.

### SUMMARY OF THE INVENTION

It is an objective of the invention to improve assistance technology.

The invention solves the problems realized by a method of the incipiently mentioned type comprising the additional features of claim 1. Further the invention proposes a system to solve the above explained issues.

One reasoning of the invention is that the above explained drawbacks may be caused by the insufficient training of the assistance models. The assistance models are not trained on meaningful sequences or even sub-sequences of user actions. It is another understanding underlying the invention that the quality of training and training data necessary to enable the assistance system to give more qualified advice requires providing labelled sequences or sub-sequences of user action data.

Conventionally labelling isn't feasible because labelling effort for user action data for training assistance systems scales exponentially.

Another understanding underlying the invention is that conventional assistance systems suffer from the fact that models are trained once and then used.

Another understanding underlying the invention is that training data may be more efficient changing over time. The user may be tracked by the system but solely tracking the user over time does not increase the number of labelled data points. It appears that conventionally labels and context of the tracking are missing.

The invention is based on the problem of improving the known computer-implemented method such that a further optimization regarding the named challenge is reached.

Proposed is a computer-implemented method for labelling of user action data in a user environment, in particular wherein said user environment is a computer implemented user interactive environment.

Essential is that the method comprises the following steps:
a) providing a pre-trained user action pattern recognition model,
   wherein the pattern recognition model is designed in such a way that the pat-tern recognition model, from a part-sequence of user actions including a user action pattern known to the pattern recognition model, recognizes the user action pattern known to the pattern recognition model, and outputs the user action pattern or a label associated with the user action pattern,
b) logging of user actions,
c) analyzing the logged user actions by said user action pattern recognition model for user action patterns known to the pattern recognition model,
d) generating of a user interaction in case of not detecting a known user action pattern in a sequence of user actions as the user interaction requesting information about the past sequence of user actions,
e) labelling the past sequence of user actions using the information received from the information request,
f) storing the labelled sequence of user actions in a user action sequence database,
g) training the pattern recognition model using the user action sequence and corresponding labels of the user action sequence database.

In the context of this invention user action data labelling is the process of adding descriptive tags or annotations to that data to make it easier to understand and analyze. This involves assigning labels or tags to user action data. The labels are used to identify and classify the data into different categories, making it easier to search, sort, and analyze. In the context of the method according to the invention the user action data labelling is a key step in training the pattern recognition model, which preferably is a machine learning model or artificial intelligence model. The labelling helps to train to recognize patterns and make accurate recognitions.

The logging of user actions may include:
1. Login attempts and user authentication activity,
2. User inputs, such as data entered into forms or search queries,
3. Movements of the cursor in application environment preferably in combination with additional cursor actions,
4. views and navigation behavior,
5. Changes made to any settings or configurations.

Basically, the user action logging or tracking may refer to all inputs done by the user into the application.

These are just a few examples, and the specific types of user actions that are logged will depend on the specific program or application being used and on the types of human-machine-interfaces used. It's also worth noting that some programs may give users the option to disable logging or opt-out of data collection entirely, while others may require logging for security or other operational reasons.

According to one embodiment it is proposed, said user interaction is done using a natural-language-processing-model.

According to one embodiment it is proposed, a user actions reduction module is applied to the logged user action sequences, wherein the user actions re-duction module is designed to recognize and eliminate potential user actions from the user action sequence that have no effect in the user environment.

Another teaching according to claim 4, which is of equal importance, relates to System for labelling of user action data in a computer implemented user inter-active environment.

Another teaching which is of equal importance relates to a System for labelling of user action data in a computer implemented user interactive environment, in particular wherein said user environment is a computer implemented user environment.

According to one embodiment it is proposed,
- at least one computer with a processor,
- at least one memory coupled to the at least one processor, the memory storing a set of instructions to be executed by the processor,
wherein said set of instructions, when executed by the processor, cause the system to perform the steps according to one of the previous claims 1 - 3.

All explanations given with regard to the computer-implemented method are fully applicable.

Another teaching which is of equal importance relates to a system comprising:
- at least one computer with a processor,
- at least one memory coupled to the at least one processor, the memory storing a set of instructions to be executed by the processor,
wherein said set of instructions, when executed by the processor, cause the system to perform the steps according to one of the previous claims 1- 4.

All explanations given with regard to the computer-implemented method are fully applicable.

According to one embodiment a system for giving advice to a user of a computer implemented user interactive environment is proposed, comprising:
- at least one computer with a processor,
- at least one memory coupled to the at least one processor, the memory storing a set of instructions to be executed by the processor,
wherein said set of instructions, when executed by the processor, cause the system to perform the steps according to claim 5.

All explanations given with regard to the computer-implemented method are fully applicable.

Furthermore, in accordance with the invention there is provided a computer-system being prepared for carrying out the method.

The computer systems referred to above can be a single computer or a computer system consisting of multiple computers that are connected to each other, such as through the World Wide Web or another network configuration. Preferably, the simulation can be distributed across the computer system in such a way that the computational work is divided among several computers, processors.

The invention is proposing a method and a system which tracks the user interactions during the operation of a machine a device or while using a software. These application possibilities are summarized by the term "user environment". The system historizes the user actions or interactions in a 'user action sequence database' which may also be called 'interaction sequence database'. Preferably, a certain history of user interactions may continuously be analyzed preferably in memory of said system (e.g. the last 100 (inter-)actions) by a pattern recognition algorithm which is used to recognize repetitions or meaningful sequences. Once a pattern is recognized, said user assistance method (claim 5) or said corresponding system will trigger an interaction with the user and ask for input from the user, e.g. via chatbot or - even better - voice input (=> labelling). In some cases, the type of interaction (interaction model) for labelling depends on the pattern that is detected. In this case a User Interaction Generation component defines the labeling workflows preferably using a template / rule-based approach.

In the labelling step, the user input for the specific pattern is preferably analyzed through Natural Language Processing (NLP), and the semantic information may be stored as a label to the sequence of user steps, now forming a high-quality data point. The NLP algorithm may rely on a pre-trained language model and the labeled database may contain preferably all previously used labels. This approach ensures consistency and quality of the entered labels.

One important objective is minimizing the user effort while receiving high quality input, namely context and reasoning for the user behavior. The method and system acquire the important information, why the customer repeats certain operations or why the user performs certain steps. This information is essential to train pattern recognition models on a higher function level of recognizing not only patterns but also on recognizing action sequences as belonging.

### BRIEF DESCRIPTION OF THE DRAWINGS

Embodiments of the invention are now described, by way of example only, with reference to the accompanying drawings, of which:

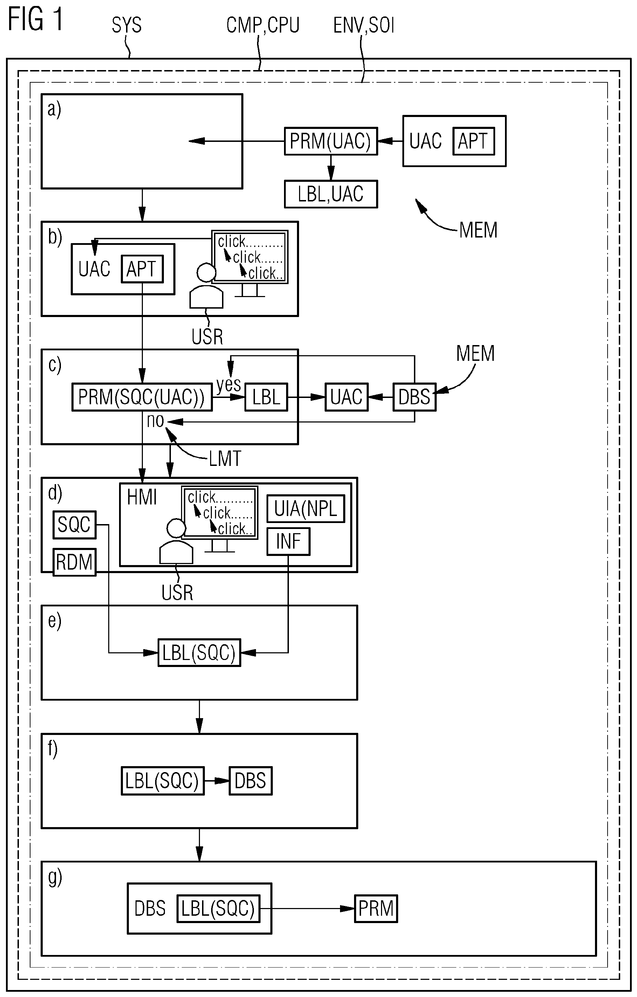

- Figure 1: shows a block diagram of a method according to the invention.

The illustration in the drawings is in schematic form. It is noted that in different figures, similar or identical elements may be provided with the same reference signs.

### DESCRIPTION OF THE DRAWINGS

Figure 1 shows a block diagram of a method according to the invention for a computer-implemented method for labelling of user action UAC data in a computer CMP implemented user interactive UIA environment ENV. Furthermore figure 1 illustrates a user assistance method and system SYS respectively applying the labelling method.

The block diagram illustrates a step sequence of steps
a) - g).

During a first step a) a pre-trained user action UAC pattern recognition model PRM is provided. This pattern recognition model PRM is designed and trained in such a way that it is capable to recognize from a part-sequence of user actions UAC a user action UAC pattern APT if the respective pattern is known to the pattern recognition model PRM. The pattern recognition model PRM outputs the stored user action UAC pattern APT or an identifier or label LBL associated with the user action UAC pattern APT.

In a second step b) the method provides logging or tracking of user actions UAC which user actions are performed by a user USR using the environment ENV.

These logged user actions UAC are then - during a step c) - analyzed by said user action UAC pattern recognition model PRM for user action UAC patterns APT known to the pattern recognition model PRM. Depending on the analysis result a user interaction UIA is generated in step d). In case of not [NO] detecting a known user action UAC pattern APT in a sequence SQC of user actions UAC during the analysis the user interaction UIA requests information INF about the past sequence SQC of user actions UAC. This request is done using a natural-language-processing-model NPL.

In case of not detecting a known user action UAC pattern APT along a predefined number LMT of user actions UAC of a sequence SQC is monitored before starting said user interaction UIA of requesting information INF about the past sequence SQC.

In case of recognizing at least one known user action UAC pattern APT [YES] via the above analysis of the pattern recognition model PRM the method provides for the generation of a user interaction UIA via said human machine interface HMI proposing at least one next user action UAC.

After having received information about the unknown user action UAC this information is used for labelling the past sequence SQC of user actions UAC using the information INF received from the information INF request in step e).

Before storing the labelled sequence SQC, e.g. directly after logging or during the analysis a user actions UAC reduction module RDM may optionally be applied to the logged user action UAC sequences SQC, wherein the user actions UAC reduction module RDM is designed to recognize and eliminate potential user actions UAC from the user action UAC sequence SQC that have no effect in the user environment ENV.

Subsequently in step f) the labelled sequence SQC of user actions UAC is stored in a user action UAC sequence SQC database DBS which's entrees are used for training the pattern recognition model PRM (step g)).

The system SYS for labelling of user action UAC data in a computer CMP implemented user interactive UIA environment ENV, which may be part of an assistance system SYS (here, the "systems" are not differentiated since their respective hardware components may be identical), comprises a computer CMP with a processor CPU and a memory MEM coupled to the at least one processor CPU wherein the memory MEM stores a set of instructions SOI to be executed by the processor CPU wherein said set of instructions SOI, when executed by the processor CPU, cause the system to perform the method-steps according to the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Independent of the grammatical term usage, individuals with male, female or other gender identities are included within the term.

## Claims

1. Computer-implemented method for labelling of user action (UAC) data in a user environment (ENV), in particular wherein said user environment (ENV) is a computer (CMP) implemented user interactive (UIA) environment (ENV),
wherein the method comprises the steps of:
a) providing a pre-trained user action (UAC) pattern recognition model (PRM),
- wherein the pattern recognition model (PRM) is designed in such a way that the pattern recognition model (PRM), from a part-sequence of user actions (UAC) including a user action (UAC) pattern (APT) known to the pattern recognition model (PRM), recognizes the user action (UAC) pattern (APT) known to the pattern recognition model (PRM), and outputs the stored user action (UAC) pattern (APT) or an identifier or label (LBL) associated with the user action (UAC) pattern (APT),
b) logging of user actions (UAC),
c) analyzing the logged user actions (UAC) by said user action (UAC) pattern recognition model (PRM) for user action (UAC) patterns (APT) known to the pattern recognition model (PRM),
d) generating of a user interaction (UIA) via a human machine interface (HMI) in case of not detecting a known user action (UAC) pattern (APT) in a sequence (SQC) of user actions (UAC) as the user interaction (UIA) requesting information (INF) about the past sequence (SQC) of user actions (UAC),
e) labelling the past sequence (SQC) of user actions (UAC) using the information (INF) received from the information (INF) request,
f) storing the labelled sequence (SQC) of user actions (UAC) in a user action (UAC) sequence (SQC) database (DBS),
g) training the pattern recognition model (PRM) using the user action (UAC) sequence (SQC) and corresponding labels (LBL) of the user action (UAC) sequence (SQC) database (DBS).

2. Computer-implemented method according to claim 1, wherein said user interaction (UIA) is done using a natural-language-processing-model (NPL).

3. Computer-implemented method according to claim 1 or 2, wherein a user actions (UAC) reduction module (RDM) is applied to the logged user action (UAC) sequences (SQC), wherein the user actions (UAC) reduction module (RDM) is designed to recognize and eliminate potential user actions (UAC) from the user action (UAC) sequence (SQC) that have no effect in the user environment (ENV).

4. Computer-implemented method according to at least one preceding claim 1 or 2, wherein in case of not detecting a known user action (UAC) pattern (APT) a predefined number of user actions (UAC) of a sequence (SQC) is monitored before starting said user interaction (UIA).

5. Computer-implemented user assistance method designed for giving advice to a user of a computer (CMP) implemented user interactive (UIA) environment (ENV) comprising the method for labelling of user action (UAC) data according to at least one of the preceding claims including the step of:
- generating of a user interaction (UIA) via a human machine interface (HMI) in case of detecting at least one known user action (UAC) pattern (APT) as the user interaction (UIA) proposing at least one next user action (UAC).

6. System for labelling of user action (UAC) data in a computer (CMP) implemented user interactive (UIA) environment (ENV), in particular wherein said user environment (ENV) is a computer (CMP) implemented user environment (ENV), comprising:
- at least one computer (CMP) with a processor (CPU),
- at least one memory (MEM) coupled to the at least one processor (CPU), the memory (MEM) storing a set of instructions (SOI) to be executed by the processor (CPU),
wherein said set of instructions (SOI), when executed by the processor (CPU), cause the system to perform the steps according to one of the previous claims 1 - 4.

7. User assistance system for giving advice to a user of a computer (CMP) implemented user interactive (UIA) environment (ENV), comprising a system according to claim 6.

## Patentansprüche

1. Computergestütztes Verfahren zum Kennzeichnen von Benutzeraktions-(UAC)-Daten in einer Benutzerumgebung (ENV), wobei es sich bei der Benutzerumgebung (ENV) insbesondere um eine computer-(CMP)-gestützte, benutzerinteraktive (UIA) Umgebung (ENV) handelt,
wobei das Verfahren folgende Schritte umfasst:
a) Bereitstellen eines vortrainierten Mustererkennungsmodells (PRM) für Benutzeraktionen (UAC),
- wobei das Mustererkennungsmodell (PRM) so gestaltet ist, dass es in einer Teilabfolge von Benutzeraktionen (UAC), die ein Benutzeraktions-(UAC)-Muster (APT) enthalten, das dem Mustererkennungsmodell (PRM) bekannt ist, das dem Mustererkennungsmodell (PRM) bekannte Benutzeraktions-(UAC)-Muster (APT) erkennt und das gespeicherte Benutzeraktions-(UAC)-Muster (APT) oder eine mit dem Benutzeraktions-(UAC)-Muster (APT) verknüpfte Kennung oder Kennzeichnung (LBL) ausgibt,
b) Protokollieren von Benutzeraktionen (UAC),
c) Analysieren der protokollierten Benutzeraktionen (UAC) durch das Benutzeraktions-(UAC)-Mustererkennungsmodell (PRM) für dem Mustererkennungsmodell (PRM) bekannte Benutzeraktions-(UAC)-Muster (APT),
d) falls in einer Abfolge (SQC) von Benutzeraktionen (UAC) kein bekanntes Benutzeraktions-(UAC)-Muster (APT) erkannt wird, Generieren einer Benutzerinteraktion (UIA) über eine Mensch-Maschine-Schnittstelle (HMI) als Informationen (INF) zur vergangenen Abfolge (SQC) von Benutzeraktionen (UAC) anfordernde Benutzerinteraktion (UIA),
e) Kennzeichnen der vergangenen Abfolge (SQC) von Benutzeraktionen (UAC) unter Verwendung der durch die Informations-(INF)-Anforderung erhaltenen Informationen (INF),
f) Speichern der gekennzeichneten Abfolge (SQC) von Benutzeraktionen (UAC) in einer Datenbank (DBS) für Abfolgen (SQC) von Benutzeraktionen (UAC),
g) Trainieren des Mustererkennungsmodells (PRM) unter Verwendung der Abfolge (SQC) von Benutzeraktionen (UAC) und entsprechender Kennzeichnungen (LBL) aus der Datenbank (DBS) für Abfolgen (SQC) von Benutzeraktionen (UAC).

2. Computergestütztes Verfahren nach Anspruch 1, wobei die Benutzerinteraktion (UIA) unter Verwendung eines Verarbeitungsmodells (NPL) für natürliche Sprache erfolgt.

3. Computergestütztes Verfahren nach Anspruch 1 oder 2, wobei ein Reduktionsmodul (RDM) für Benutzeraktionen (UAC) auf die protokollierten Abfolgen (SQC) von Benutzeraktionen (UAC) angewendet wird, wobei das Reduktionsmodul (RDM) für Benutzeraktionen (UAC) so gestaltet ist, dass es potentielle Benutzeraktionen (UAC), die in der Benutzerumgebung (ENV) keine Auswirkung haben, in der Abfolge (SQC) von Benutzeraktionen (UAC) erkennt und daraus eliminiert.

4. Computergestütztes Verfahren nach mindestens einem der vorhergehenden Ansprüche 1 und 2, wobei, falls kein bekanntes Benutzeraktions-(UAC)-Muster (APT) erkannt wird, vor dem Starten der Benutzerinteraktion (UIA) eine vorgegebene Anzahl Benutzeraktionen (UAC) in einer Abfolge (SQC) überwacht wird.

5. Computergestütztes Benutzerunterstützungsverfahren, das so gestaltet ist, dass es einen Benutzer einer computer-(CMP)-gestützten, benutzerinteraktiven (UIA) Umgebung (ENV) berät, und das Verfahren zum Kennzeichnen von Benutzeraktions-(UAC)-Daten nach mindestens einem der vorhergehenden Ansprüche mit folgendem Schritt umfasst:
- falls mindestens ein bekanntes Benutzeraktions-(UAC)-Muster (APT) erkannt wird, Generieren einer Benutzerinteraktion (UIA) als Benutzerinteraktion (UIA), die mindestens eine nächste Benutzeraktion (UAC) vorschlägt, über eine Mensch-Maschine-Schnittstelle (HMI).

6. System zum Kennzeichnen von Benutzeraktions-(UAC)-Daten in einer computer-(CMP)-gestützten, benutzerinteraktiven (UIA) Umgebung (ENV), wobei es sich bei der Benutzerumgebung (ENV) insbesondere um eine computer-(CMP)-gestützte Benutzerumgebung (ENV) handelt, mit Folgendem:
- mindestens einem Computer (CMP) mit einem Prozessor (CPU),
- mindestens einem Speicher (MEM), der mit dem mindestens einen Prozessor (CPU) gekoppelt ist, wobei in dem Speicher (MEM) ein Satz Anweisungen (SOI) gespeichert ist, die von dem Prozessor (CPU) ausgeführt werden sollen,
wobei der Satz Anweisungen (SOI), wenn er von dem Prozessor (CPU) ausgeführt wird, bewirkt, dass das System die Schritte nach einem der vorhergehenden Ansprüche 1 - 4 durchführt.

7. Benutzerunterstützungssystem zum Beraten eines Benutzers einer computer-(CMP)-gestützten, benutzerinteraktiven (UIA) Umgebung (ENV), das ein System nach Anspruch 6 umfasst.

## Revendications

1. Procédé mis en œuvre par ordinateur d'étiquetage de données d'action (UAC) d'utilisateur dans un environnement (ENV) d'utilisateur, dans lequel, en particulier ledit environnement (ENV) d'utilisateur est un environnement (ENV) interactif (UIA) d'utilisateur mis en œuvre par ordinateur (CMP), dans lequel le procédé comprend les stades de :
a) se procurer un modèle (PRM) pré-entraîné de reconnaissance de configuration d'action (UAC) d'utilisateur,
- dans lequel le modèle (PRM) de reconnaissance de configuration est conçu, d'une manière telle, que le modèle (PRM) de reconnaissance de configuration reconnaît, à partir d'une séquence partielle d'actions (UAC) d'utilisateur incluant une configuration (APT) d'action (UAC) d'utilisateur connue du modèle (PRM) de reconnaissance de configuration, la configuration (APT) d'action (UAC) d'utilisateur connue du modèle (PRM) de reconnaissance de configuration et sort la configuration (APT) mise en mémoire d'action (UAC) d'utilisateur ou un identifiant ou une étiquette (LBL) associée à la configuration (APT) d'action (UAC) d'utilisateur,
b) enregistrer des actions (UAC) d'utilisateur,
c) analyser les actions (UAC) d'utilisateur enregistrées par ledit modèle (PRM) de reconnaissance de configuration d'action (UAC) d'utilisateur pour des configurations (APT) d'action (UAC) d'utilisateur connues du modèle (PRM) de reconnaissance de configuration,
d) créer une interaction (UIA) d'utilisateur par une interface (HMI) homme machine, dans le cas de non détection d'une configuration (APT) connue d'action (UAC) d'utilisateur dans une séquence (SQC) d'actions (UAC) d'utilisateur comme information (INF) demandant une interaction (UIA) d'utilisateur sur la séquence (SQC) passée d'actions (UAC) d'utilisateur,
e) étiqueter la séquence (SQC) passée d'actions (UAC) d'utilisateur en utilisant l'information (INF) reçue de la demande d'information (INF),
f) mettre en mémoire la séquence (SQC) étiquetée d'actions (UAC) d'utilisateur dans une base (DBS) de données de séquence (SQC) d'actions (UAC) d'utilisateur,
g) entraîner le modèle (PRM) de reconnaissance de configuration en utilisant la séquence (SQC) d'actions (UAC) d'utilisateur et des étiquettes (LBL) correspondantes de la base (DBS) de données de séquence (SQC) d'actions (UAC) d'utilisateur.

2. Procédé mis en œuvre par ordinateur suivant la revendication 1, dans lequel ladite interaction (UIA) d'utilisateur est faite en utilisant un modèle (NPL) de traitement en langage naturel.

3. Procédé mis en œuvre par ordinateur suivant la revendication 1 ou 2, dans lequel un module (RDM) de réduction d'actions (UAC) d'utilisateur est appliqué aux séquences (SQC) enregistrées d'actions (UAC) d'utilisateur, dans lequel le module (RDM) de réduction d'actions (UAC) d'utilisateur est conçu pour reconnaître et éliminer des actions (UAC) d'utilisateur potentielles de la séquence (SQC) d'actions (UAC) d'utilisateur, qui n'ont pas d'effet dans l'environnement (ENV) d'utilisateur.

4. Procédé mis en œuvre par ordinateur suivant au moins l'une des revendications 1 ou 2 précédentes, dans lequel, dans le cas de non détection d'une configuration (APT) connue d'action (UAC) d'utilisateur, un nombre défini à l'avance d'actions (UAC) d'utilisateur d'une séquence (SQC) est contrôlé avant de faire débuter ladite interaction (UIA) d'utilisateur.

5. Procédé d'assistance d'utilisateur mis en œuvre par ordinateur conçu pour donner avis à un utilisateur d'un environnement (ENV) interactif (UIA) d'utilisateur mis en œuvre par ordinateur (CMP), comprenant le procédé d'étiquetage de données d'action (UAC) d'utilisateur suivant au moins l'une des revendications précédentes incluant le stade de :
- création d'une interaction (UIA) d'utilisateur par l'intermédiaire d'une interface (HMI) homme machine, en cas de détection d'au moins une configuration (APT) connue d'action (UAC) d'utilisateur comme interaction (UIA) d'utilisateur proposant au moins une action (UAC) d'utilisateur suivante.

6. Système d'étiquetage de données d'action (UAC) d'utilisateur dans un environnement (ENV) interactif (UIA) d'utilisateur mis en œuvre par ordinateur (CMP), dans lequel, en particulier ledit environnement (ENV) d'utilisateur est un environnement (ENV) d'utilisateur mis en œuvre par ordinateur (CMP), comprenant :
- au moins un ordinateur (CMP) ayant un processeur (CPU),
- au moins une mémoire (MEM) raccordée au au moins un processeur (CPU), la mémoire (MEM) mettant en mémoire un ensemble d'instructions (SOI) à exécuter par le processeur (CPU),
dans lequel ledit ensemble d'instructions (SOI), lorsqu'il est exécuté par le processeur (CPU), fait que le système effectue les stades suivant l'une des revendications 1 à 4 précédentes.

7. Système d'assistance d'utilisateur pour donner avis à un utilisateur d'un environnement (ENV) interactif (UIA) d'utilisateur mis en œuvre par ordinateur (CMP), comprenant un système suivant la revendication 6.
